(19) Europäisches Patentamt
European Patent Office
Office européen des brevets

(11) EP 4 386 032 A1

(12) EUROPEAN PATENT APPLICATION
published in accordance with Art. 153(4) EPC

(43) Date of publication:
**19.06.2024 Bulletin 2024/25**

(21) Application number: **22855792.2**

(22) Date of filing: **27.07.2022**

(51) International Patent Classification (IPC):
***C08G 59/10*** (2006.01) ***C08K 5/18*** (2006.01)
***C08L 101/00*** (2006.01) ***C08L 63/00*** (2006.01)
***C08J 5/04*** (2006.01)

(52) Cooperative Patent Classification (CPC):
**C08G 59/10; C08J 5/04; C08K 5/18; C08L 63/00; C08L 101/00**

(86) International application number:
**PCT/JP2022/028912**

(87) International publication number:
**WO 2023/017729 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2021 JP 2021130619**

(71) Applicant: **Teijin Limited**
**Osaka 530-0005 (JP)**

(72) Inventors:
- **OSAKI Kohei**
**Osaka-shi Osaka 530-0005 (JP)**
- **OZAWA Suguru**
**Osaka-shi Osaka 530-0005 (JP)**
- **KANEKO Toru**
**Osaka-shi Osaka 530-0005 (JP)**

(74) Representative: **Carpmaels & Ransford LLP**
**One Southampton Row**
**London WC1B 5HA (GB)**

# (54) FIBER-REINFORCED COMPOSITE MATERIAL AND PRODUCTION METHOD THEREFOR

(57) [Solution]

A fiber-reinforced composite material contains a resin cured product obtained by curing an epoxy resin composition containing a curing agent A, a curing agent B, a curing agent C, an epoxy resin D, an epoxy resin E, and resin particles F, and a stitched reinforcing fiber base material; wherein the curing agent A is an aromatic diamine having a substituent selected from an alkyl group and a halogen group at each of two ortho positions of an amino group; the curing agent B is an aromatic polyamine that is liquid at 25°C; the curing agent C is a phenylenediamine derivative, and the epoxy resin D is tetraglycidyl-3,4'-diaminodiphenyl ether; the epoxy resin E is an epoxy resin composed of a bifunctional monomer containing an amine-type glycidyl group; and the stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member. The fiber-reinforced composite material enables a fiber-reinforced composite material to be provided that achieves high productivity, and exhibits heat resistance and mechanical properties while using an epoxy resin composition that has low viscosity, a long pot life, and fast curability.

EP 4 386 032 A1

## Description

[Technical Field]

The present invention relates to a fiber-reinforced composite material and a production method therefor.

[Background Art]

Fiber-reinforced composite materials have lightweightness, high strength, and high rigidity, and thus are used in a wide range of fields such as sports and leisure applications of fishing rods, golf shafts, and the like, and industrial applications of automobiles, aircraft, and the like. As a method of molding a fiber-reinforced composite material using a thermosetting resin as a matrix resin, the following methods have been known: a resin transfer molding (RTM) method in which a reinforcing fiber base material placed in a mold in advance is impregnated with a liquid resin composition and then cured to obtain a fiber-reinforced composite material, and a method in which a prepreg (intermediate base material) is prepared by impregnating in advance a resin into a reinforcing fiber base material to form a sheet shape, and then the prepreg is molded.

In recent years, attention has been focused on the RTM method: a low-cost and highly productive method which requires few steps for producing a fiber-reinforced composite material and does not require expensive equipment such as an autoclave. The matrix resin used in the RTM method mainly contains an epoxy resin and a curing agent, and optionally contains other additives. In order to obtain cured products and fiber-reinforced composite materials with high mechanical properties, aromatic polyamines are commonly used as curing agents.

In the epoxy resin composition used in the RTM method, the curing agent and additives are often stored and used in a dissolved state in the epoxy resin which is used as a base resin in order to prevent the curing agent from being filtered out during the impregnation of the epoxy resin composition into the reinforcing fiber base material. Such an epoxy resin composition in which a curing agent and additives are dissolved in the epoxy resin used as the base resin is called a one-component epoxy resin composition. Herein, the curing agent existing in a dissolved state in the epoxy resin is relatively likely to react with the epoxy resin, causing a problem of shortening the shelf life of the epoxy resin composition. Therefore, it has been necessary to store the one-component epoxy resin composition in a frozen state.

In order to solve this problem, a two-component epoxy resin composition is under consideration in which an epoxy resin and a curing agent are mixed just before use. A two-component epoxy resin composition is composed of a base resin liquid containing an epoxy resin as a main component and a curing agent liquid (curing agent composition) containing a curing agent as a main component, and is obtained by mixing the two just before use.

In a two-component epoxy resin composition, ease of the mixing is important because the base resin liquid and the curing agent liquid are mixed just before use. Although the curing agent used in the one-component epoxy resin composition can also be used as the curing agent for the two-component epoxy resin composition, the curing agent of aromatic polyamine used in the one-component epoxy resin composition is usually a solid as described in PTL 1, and is likely to cause insufficient mixing with the base resin liquid. Therefore, the curing agent composition is desirably in a liquid form.

As an epoxy resin composition using a curing agent of a liquid aromatic polyamine, those described in PTLs 2 and 3 are known. However, the resin cured products obtained from the epoxy resin compositions described in PTL 2 and 3 do not have mechanical properties such as elastic modulus and fracture toughness required for industrial applications such as automobiles and aircraft.

In addition, in the RTM method, fast curability is required for highly efficient production of fiber-reinforced composite materials. PTL 4 proposes a fast-curable two-component epoxy resin composition using a compound having two or more aromatic rings having phenolic hydroxy groups. However, addition of a compound having a phenolic hydroxy group to the epoxy resin composition rapidly increases the viscosity of the resin composition due to its high reactivity, and extremely shortens the pot life in RTM molding, resulting in difficulty of impregnating a sufficient amount of the resin composition inside the reinforcing fiber base material. Therefore, a fiber-reinforced composite material produced using such an epoxy resin composition is to contain many internal defects such as voids. As a result, there is a problem of lowering the compression performance, damage tolerance, and the like of the fiber-reinforced composite material.

Thus, there has been no fiber-reinforced composite material that achieves high productivity by using an epoxy resin composition having both fast curability and a sufficient pot life, and at the same time, exhibits high-level heat resistance and mechanical properties required for industrial applications such as automobiles and aircraft.

[PTL 1]
JP-A-2014-148572

[PTL 2]

JP-A-2015-193713

[PTL 3]
WO2009/119467

[PTL 4]
Japanese Patent No. 6617559

[Summary of Invention]

[Technical Problem]

An object of the present invention is to provide a fiber-reinforced composite material that solves the above-mentioned problems of the prior art, achieves high productivity, and exhibits heat resistance and mechanical properties required for industrial applications while using an epoxy resin composition that has low viscosity, a long pot life, and fast curability.

[Solution to Problem]

That is, the present invention is a fiber-reinforced composite material comprising: a resin cured product obtained by curing an epoxy resin composition containing a curing agent A, a curing agent B, a curing agent C, an epoxy resin D, an epoxy resin E, and resin particles F, and a stitched reinforcing fiber base material; wherein the curing agent A is an aromatic diamine having a substituent selected from an alkyl group and a halogen group at each of two ortho positions of an amino group;

the curing agent B is an aromatic polyamine that is liquid at 25°C;
the curing agent C is a phenylenediamine derivative;
the epoxy resin D is tetraglycidyl-3,4'-diaminodiphenyl ether;
the epoxy resin E is an epoxy resin composed of a bifunctional monomer containing an amine-type glycidyl group; and
the stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member.

[Advantageous Effects of Invention]

According to the present invention, there can be provided a fiber-reinforced composite material that achieves high productivity, and exhibits heat resistance and mechanical properties required for industrial applications while using an epoxy resin composition that has low viscosity, a long pot life, and fast curability.

[Description of Embodiments]

The present invention will be described in detail below. A fiber-reinforced composite material is sometimes abbreviated as "FRP", and a carbon fiber reinforced composite material as "CFRP".

[Curing agent]

The epoxy resin composition used in the present invention contains three types of curing agents: curing agent A, curing agent B, and curing agent C, which will be described later.

The total amount of the curing agent A, curing agent B and curing agent C contained in the epoxy resin composition of the present invention is an amount suitable for curing all the epoxy resins blended in the epoxy resin composition, and is adjusted appropriately depending on the type of epoxy resin and curing agent for use.

Specifically, the ratio between the number of epoxy groups contained in the epoxy resin in the epoxy resin composition of the present invention and the number of active hydrogens contained in the curing agent A, curing agent B, and curing agent C is preferably 0.7 to 1.3, more preferably 0.8 to 1.2, and particularly preferably 0.9 to 1.1. The ratio less than 0.7 or more than 1.3 will disturb the molar balance between the epoxy groups and the active hydrogens, and may cause insufficient cross-linking density in the obtained resin cured product, resulting in decrease in heat resistance and mechanical properties such as elastic modulus and fracture toughness, which is not preferable.

In the present invention, when the curing agent A, curing agent B, and curing agent C are mixed and used as

a curing agent liquid, the curing agent liquid preferably becomes a uniform liquid by heating to a temperature of 200°C or less. After becoming a uniform liquid, the period for maintaining the uniform liquid state at room temperature is preferably one week or more, more preferably three weeks or more, and particularly preferably one month or more. The period of less than one week for maintaining a uniform liquid state at room temperature causes substantial difficulty in handling a curing agent composition for thermosetting resins as a liquid, and is likely to cause insufficient mixing with the epoxy base resin liquid, which is not preferable.

[Curing agent A]

The curing agent A is an aromatic diamine having a substituent selected from an alkyl group and a halogen group at each of two ortho positions of an amino group.

In addition, the curing agent A is solid at 25°C. Containing the curing agent A, when cured as a composition with an epoxy resin, enables an epoxy resin cured product to be obtained that has excellent heat resistance and mechanical properties such as elastic modulus, and fracture toughness.

A compound represented by the following chemical formula (1) can be used as the aromatic diamine having a substituent at each of two ortho positions of the amino group, which is used as the curing agent A.

[Chem. 1]

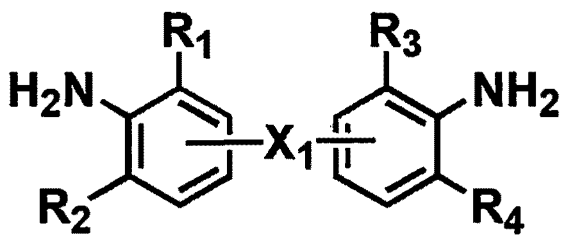

Chemical formula (1)

In the above chemical formula (1), $R_1$ to $R_4$ are each independently an aliphatic substituent or a halogen atom, and at least one substituent is an aliphatic substituent having 1 to 6 carbon atoms or a halogen atom. $X_1$ is $-CH_2-$, $-CH(CH_3)-$, $-C(CH_3)_2-$, -S-, -O-, $-SO_2-$, -CO-, -CONH-, -NHCO-, -C(=O)-, or -O-C(=O)-.

In the chemical formula (1), examples of aliphatic substituents having 1 to 6 carbon atoms include methyl group, ethyl group, propyl group, isopropyl group, n-butyl group, sec-butyl group, tert-butyl group, n-pentyl group, neopentyl group, n-hexyl group, and cyclohexyl group.

The aromatic diamine of curing agent A is particularly preferably a 4,4'-diaminodiphenylmethane derivative.

Specific examples of the aromatic diamines include compounds represented by the following chemical formulas (2) to (5). These may be used alone or in combination.

[Chem. 2]

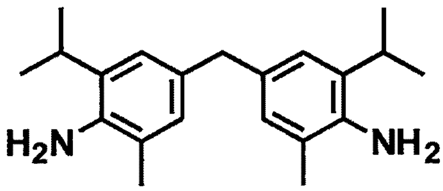

Chemical formula (2)

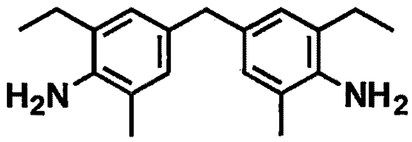

Chemical formula (3)

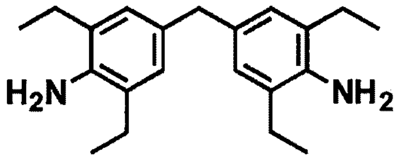

Chemical formula (4)

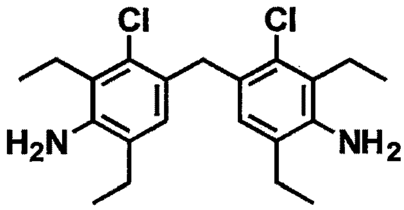

Chemical formula (5)

[Curing agent B]

The curing agent B is an aromatic polyamine that is liquid at 25°C. Containing the aromatic polyamine enables a curing agent composition for thermosetting resin to be obtained that is capable of maintaining a liquid state at room temperature.

As the aromatic polyamine of the curing agent B, a phenylenediamine derivative or a 4,4'-diaminodiphenyl methane derivative is preferably used. Examples of the aromatic polyamine include compounds represented by the following chemical formula (6) or (7).

[Chem. 3]

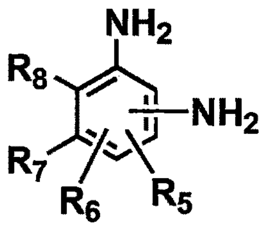

Chemical formula (6)

In the chemical formula (6), $R_5$ to $R_8$ are each independently a hydrogen atom, an aliphatic substituent, an alkoxy group, or a thioalkoxy group, and at least one substituent is an aliphatic substituent having 1 to 6 carbon atoms

or a thioalkoxy group.

[Chem. 4]

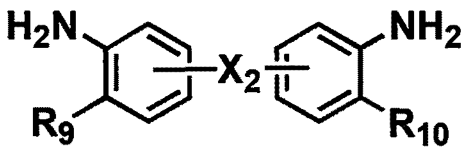

Chemical formula (7)

In the chemical formula (7), $R_9$ to $R_{10}$ are each independently an aliphatic substituent, a methoxy group, an alkoxy group or a thioalkoxy group. $X_2$ is $-CH_2-$, $-CH(CH_3)-$, $-C(CH_3)_2-$, -S-, -O-, $-SO_2-$, -CO-, -CONH-, -NHCO-, -C(=O)-, or -O-C(=O)-.

Specific examples of the aromatic polyamine used as the curing agent B include compounds represented by the following chemical formulas (8) to (12). These may be used alone or in combination.

[Chem. 5]

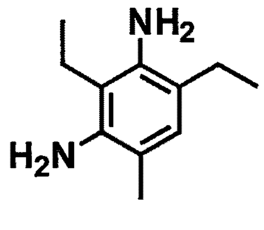

Chemical formula (8)

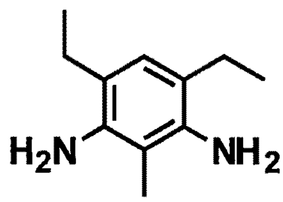

Chemical formula (9)

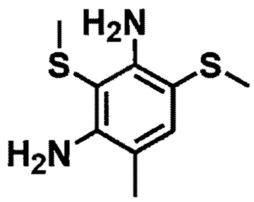

Chemical formula (10)

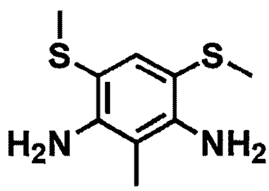

Chemical formula (11)

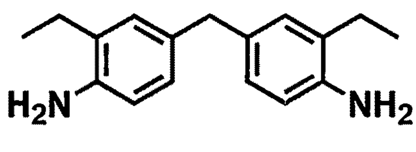

Chemical formula (12)

[Curing agent C]

The curing agent C is a phenylenediamine derivative. Containing the curing agent C facilitates the curing reaction of the obtained epoxy resin composition, and can impart fast curability to the epoxy resin composition.

The phenylenediamine derivative of the curing agent C optionally has a substituent, which is preferably a methyl group, ethyl group, propyl group, isopropyl group, methoxy group or ethoxy group. These substituents are electron-donating and do not reduce the reactivity of the amino group contained in the curing agent C.

Examples of the curing agent C include o-phenylenediamine, m-phenylenediamine, p-phenylenediamine, 2,4-diaminotoluene, 2,6-diaminotoluene, and 2,4,6-trimethyl-1,3-phenylenediamine. Among these, 2,6-diaminotoluene and m-phenylenediamine are preferred.

The curing agent C preferably has a melting point of 200°C or lower, more preferably 150°C or lower, and particularly preferably 120°C or lower. The melting point higher than 200°C makes it difficult to obtain a liquid composition when the curing agent C is mixed with the curing agent A and curing agent B, and tends to make it difficult to maintain the obtained curing agent composition for thermosetting resin in a liquid state at room temperature, which is thus not

preferable.

From the viewpoints of ease of mixing the epoxy base resin liquid and curing agent liquid and uniformity of the mixed liquid during RTM molding, the curing agent A, curing agent B, and curing agent C are preferably mixed to be in a uniform liquid at a temperature of 80 to 200°C. Further, the mixed liquid preferably maintains a uniform liquid state even after raising the liquid temperature to 200°C, then lowering to 25°C, and left standing at 25°C for one week.

[Epoxy resin D]

The epoxy resin D is tetraglycidyl-3,4'-diaminodiphenyl ether.

In addition to tetraglycidyl-3,4'-diaminodiphenyl ether, the epoxy resin composition may further contain an epoxy resin composed of a tetrafunctional monomer having an amine-type glycidyl group. The epoxy resin may be a homopolymer composed of one type of monomer, a copolymer composed of two or more types of monomers, or a mixture of homopolymers and/or copolymers.

The tetrafunctional monomer having an amine-type glycidyl group is preferably represented by the following chemical formula (13).

[Chem. 6]

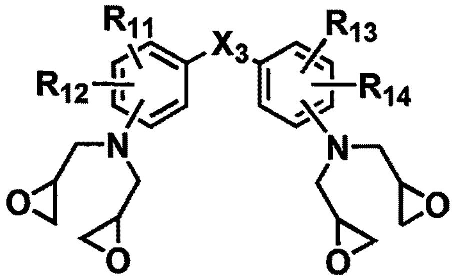

Chemical formula (13)

(In the chemical formula (13), $R_{11}$ to $R_{14}$ each independently represent one selected from the group consisting of a hydrogen atom, an aliphatic hydrocarbon group, an alicyclic hydrocarbon group, and a halogen atom, and $X_3$ represents one selected from $-CH_2-$, -O-, -S-, -CO-, -C(=O)O-, -O-C(=O)-, -NHCO-, -CONH-, $-SO_2-$. Except the case where all of $R_{11}$, $R_{12}$, $R_{13}$, and $R_{14}$ are hydrogen atoms.)

$R_{11}$ to $R_{14}$ each, when being an aliphatic hydrocarbon group or alicyclic hydrocarbon group, preferably have 1 to 4 carbon atoms. In addition, $X_3$ is preferably - O- to facilitate the synthesis of the compound.

Constituent monomers of the epoxy resin D may be synthesized by any method. For example, the constituent monomer can be obtained by reacting raw materials of aromatic diamine and epihalohydrin such as epichlorohydrin preferably in the presence of an acid catalyst to obtain a tetrahalohydrin body, followed by a cyclization reaction using an alkaline compound. Specifically, synthesis can be performed by the method described in Examples below.

Examples of epihalohydrin include epichlorohydrin, epibromohydrin, and epifluorohydrin. Among them, epichlorohydrin and epibromohydrin are particularly preferable from the viewpoint of reactivity and handleability.

The mass ratio of the raw materials of aromatic diamine to epihalohydrin is preferably 1:1 to 1:20, and more preferably 1:3 to 1:10. Examples of the solvents used in the reaction include alcohol solvents such as ethanol and n-butanol, ketone solvents such as methyl isobutyl ketone and methyl ethyl ketone, aprotic polar solvents such as acetonitrile and N,N-dimethylformamide, and aromatic hydrocarbon solvents such as toluene and xylene. Alcohol solvents such as ethanol and n-butanol, and aromatic hydrocarbon solvents such as toluene and xylene are particularly preferable.

The amount of the solvent to be used is preferably 1 to 10 mass times of the aromatic diamine. Acid catalysts of Bronsted acids and Lewis acids both can be suitably used. Bronsted acids are preferably ethanol, water, and acetic acid, and Lewis acids are preferably titanium tetrachloride, lanthanum nitrate hexahydrate, and boron trifluoride diethyl ether complex.

The reaction time is preferably 0.1 to 180 hours, and more preferably 0.5 to 24 hours. The reaction temperature is preferably 20 to 100°C, and more preferably 40 to 80°C.

Examples of alkaline compounds used in the cyclization reaction include sodium hydroxide and potassium hydroxide. The alkaline compound may be added as a solid or as an aqueous solution.

A phase transfer catalyst may be used during the cyclization reaction. Examples of phase transfer catalysts includes quaternary ammonium salts such as tetramethylammonium chloride, tetraethylammonium bromide, benzyltriethylammonium chloride, and tetrabutylammonium hydrogen sulfate; phosphonium compounds such as tributylhexadecylphosphonium bromide and tributyldodecylphosphonium bromide; and crown ethers such as 18-crown-6-ether.

In the epoxy resin composition of the present invention, the proportion of the epoxy resin D to the total amount of the epoxy resin (epoxy base resin liquid) is preferably 50 to 90 mass%, and particularly preferably 60 to 80 mass%. The proportion of the epoxy resin D of 50 mass% or more can further improves the heat resistance and elastic modulus of the obtained resin cured product. As a result, various mechanical properties of the obtained fiber-reinforced composite material are also improved.

[Epoxy resin E]

The epoxy resin E is an epoxy resin composed of a bifunctional monomer containing an amine-type glycidyl group.

Containing the epoxy resin E can reduce the viscosity of the epoxy resin composition and improve impregnation property of the resin into the reinforcing fiber base material, extend the pot life, and thus can increase the degree of freedom in designing the mold used in the RTM method.

Combination use of the epoxy resin E and the epoxy resin D enables the resin to improve the impregnation property into the reinforcing fiber base material, and enables a resin cured product and a fiber-reinforced composite material to be obtained that maintain heat resistance and a high elastic modulus.

As the bifunctional monomer having amine-type glycidyl groups, preferably used are an aromatic bifunctional monomer having amine-type glycidyl groups, more preferably diglycidylaniline and derivatives thereof such as diglycidyl-o-toluidine, diglycidyl- m-toluidine, diglycidyl-p-toluidine, diglycidyl-xylidine, diglycidyl-mesidine, diglycidyl-anisidine, and diglycidyl-phenoxyaniline, and diglycidyl-naphthylamine and derivatives thereof, more preferably used are diglycidyl-aniline, diglycidyl-o-toluidine, diglycidyl-m-toluidine, diglycidyl-p-toluidine, and diglycidyl-phenoxyaniline, and particularly preferably used are diglycidyl-aniline or diglycidyl-o-toluidine.

In the epoxy resin composition, the content of the epoxy resin E is, with respect to the total mass of the epoxy resin (epoxy base resin liquid), preferably 10 to 50 mass%, and more preferably 20 to 40 mass%. Setting the content of the epoxy resin E within this range with respect to the total mass of the epoxy resin enables an epoxy resin composition to be produced that has a viscosity and pot life suitable for the RTM method and high heat resistance.

[Resin particles F]

The epoxy resin composition contains resin particles F. The resin particles F are undissolved and dispersed in the epoxy resin composition, and, even in the resin cured product after the epoxy resin composition is cured, are present as a dispersed state in the resin cured product. When the resin cured product is present as a sea component, the resin particles F are present as an island component in the resin cured product.

Containing the resin particles F can impart high fracture toughness and impact resistance to the resin cured product and the fiber-reinforced composite material.

As resin particles F, for example, thermoplastic resin particles, thermosetting resin particles, and rubber particles can be used, and rubber particles are preferably used. Examples of the rubber particles include silicone rubber, butadiene rubber, styrene-butadiene rubber, and methyl methacrylate-butadiene-styrene rubber.

Examples of commercially available rubber particles used as the resin particles F include MX-153 (bisphenol A type epoxy resin with 33 mass% of butadiene rubber monodispersed, manufactured by Kaneka Corporation), MX-257 (bisphenol A type epoxy resin with 37 mass% of butadiene rubber monodispersed, manufactured by Kaneka Corporation), MX-154 (bisphenol A type epoxy resin with 40 mass% of butadiene rubber monodispersed, manufactured by Kaneka Corporation), MX-960 (bisphenol A type epoxy resin with 25 mass% of silicone rubber monodispersed, manufactured by Kaneka Corporation), MX-136 (bisphenol F type epoxy resin with 25 mass% butadiene rubber monodispersed, manufactured by Kaneka Corporation), MX-965 (bisphenol F type epoxy resin with 25 mass% of silicone rubber monodispersed, manufactured by Kaneka Corporation), MX- 217 (phenol novolak type epoxy resin with 25 mass% of butadiene rubber monodispersed, manufactured by Kaneka Corporation), MX-227M75 (bisphenol A novolak type epoxy resin with 25 mass% of styrene butadiene rubber monodispersed, manufactured by Kaneka Corporation), MX-334M75 (brominated epoxy resin with 25 mass% of styrene-butadiene rubber monodispersed, manufactured by Kaneka Corporation), MX-416 (tetrafunctional glycidylamine-type epoxy resin with 25 mass% of butadiene rubber monodispersed, manufactured by Kaneka Corporation), and MX-451 (trifunctional glycidylamine-type epoxy resin with 25 mass% of styrene-butadiene rubber monodispersed, manufactured by Kaneka Corporation).

The resin particles F have an average particle size of preferably 1.0 μm or less, more preferably 0.5 μm or less, and particularly preferably 0.3 μm or less. The average particle size is preferably 0.03 μm or more, more preferably 0.05 μm or more, and particularly preferably 0.08 μm or more.

The average particle size of 1 μm or less can prevent the resin particles F from being filtered out on the surface of the reinforcing fiber base material in the step of impregnating the epoxy resin composition into the reinforcing fiber

base material, and facilitates impregnation into the reinforcing fiber bundle. Accordingly, poor impregnation of the resin can be prevented, and a fiber-reinforced composite material having excellent physical properties can be obtained.

In the epoxy resin composition, the content of the resin particles F is, with respect to the total amount (100 mass%) of the epoxy resin composition, preferably 0.1 to 50 mass%, more preferably 0.5 to 20 mass%, and particularly preferably 1 to 15 mass%. Setting the content to 0.1 mass% or more can sufficiently improve the fracture toughness and impact resistance of the resin cured product and fiber composite material.

The resin particles F are also dispersed at a high concentration in an epoxy resin, which can be used as a masterbatch. This case facilitates high dispersion of the resin particles F in the epoxy resin composition.

[Composition ratio of epoxy resin composition]

The total amount of the curing agent A, curing agent B, and curing agent C is, with respect to the total mass of the curing agents contained in the epoxy resin composition, 70 to 100 mass%, and preferably 80 to 100 mass%. The total amount of less than 70 mass% may result in insufficient heat resistance of the resin cured product.

The mass ratio of the curing agent A to the curing agent B in the epoxy resin composition is preferably 1:99 to 99:1, more preferably 20:80 to 80:20, and particularly preferably 40:60 to 70:30. The mass ratio of the curing agent A to the curing agent B less than 1:99 tends to result in insufficient heat resistance and mechanical properties such as elastic modulus and fracture toughness of the obtained resin cured product, which is not preferable. On the other hand, the mass ratio of the curing agent A to the curing agent B more than 99:1 makes it difficult for the obtained curing agent composition for thermosetting resin to maintain a liquid state at room temperature, which is not preferable.

The epoxy resin composition contains the curing agent C of, with respect to a total of 100 parts by mass of the curing agent A and curing agent B, preferably 1 to 43 parts by mass, more preferably 3 to 30 parts by mass, and more preferably 5 to 20 parts by mass. The content of the curing agent C less than 1 part by mass makes it difficult to impart fast curability to the obtained epoxy resin composition, which is not preferable. On the other hand, the content more than 43 parts by mass excessively enhances the reactivity of the obtained epoxy resin composition, and extremely shortens the pot life during RTM molding, which is not preferable. This case makes it difficult to impregnate a sufficient amount of resin inside the reinforcing fiber base material, and the fiber-reinforced composite material produced using such an epoxy resin composition will contain many defects such as voids, resulting in reduction of the compression performance and damage tolerance of the fiber-reinforced composite material structure.

The ratio between the total number of epoxy groups and the total number of active hydrogens contained in the epoxy resin composition is preferably 0.7 to 1.3. The ratio within this range enables a favorable molar balance between epoxy groups and active hydrogen, and a high crosslinking density in the cured resin product, which enables production of a resin cured product exhibiting heat resistance and excellent mechanical properties such as elastic modulus and fracture toughness.

[Other optional components]

The epoxy resin composition may contain a curing agent other than curing agent A, curing agent B, or curing agent C, also may contain an epoxy resin other than epoxy resin D or epoxy resin E, and a thermosetting resin other than epoxy resin, and also may contain a thermoplastic resin other than resin particles F, and other additives.

Examples of the curing agent other than curing agent A, curing agent B, or curing agent C include aliphatic polyamines, various isomers of aromatic amine curing agents, aminobenzoates, and acid anhydrides.

Examples of the aliphatic polyamine include 4,4'-diaminodicyclohexylmethane, isophoronediamine, and m-xylylenediamine.

Examples of the aminobenzoate include trimethylene glycol di-p-aminobenzoate and neopentyl glycol di-p-aminobenzoate. Cured products and fiber-reinforced composite materials cured using these curing agents have high tensile elongation.

Examples of the acid anhydride include 1,2,3,6-tetrahydrophthalic anhydride, hexahydrophthalic anhydride, and 4-methylhexahydrophthalic anhydride. Use of these curing agents enables an uncured resin composition to have a long pot life, and enables a cured product to be obtained that is relatively well-balanced among electrical properties, chemical properties, mechanical properties, and the like.

As the epoxy resin other than epoxy resin D or epoxy resin E, for example, a trifunctional epoxy resin can be used.

This trifunctional epoxy resin preferably has an aromatic ring structure. Such an epoxy resin is preferably a triglycidylaminophenol derivative epoxy resin. Examples of the triglycidylaminophenol derivative epoxy resin include triglycidyl-m-aminophenol and triglycidyl-p-aminophenol. Containing such an epoxy resin enables the epoxy resin composition to reduce the viscosity, and enables the resin cured product to improve the heat resistance.

The trifunctional epoxy resin also preferably has a heteroaromatic ring structure. That is, a triglycidyl isocyanurate derivative epoxy resin is also preferably contained. Examples of the triglycidyl isocyanurate derivative epoxy resin

include 1,3,5-triglycidyl isocyanurate, 1,3,5-tri(ethylglycidyl) isocyanurate, and 1,3,5-tri(pentylglycidyl) isocyanurate. Containing these enables the epoxy resin cured product to improve the heat resistance and elastic modulus. Therefore, use of the epoxy resin in combination with epoxy resin D and epoxy resin E enables a resin cured product and a fiber-reinforced composite material to be obtained that maintain heat resistance and a high elastic modulus.

As the epoxy resin other than epoxy resin D or epoxy resin E, for example, an epoxy resin having a polycyclic aromatic hydrocarbon skeleton can be used.

Examples of the polycyclic aromatic hydrocarbon skeleton include naphthalene skeletons and anthracene skeletons, and naphthalene skeletons are preferable from the viewpoint of physical properties of resin cured product.

The polycyclic aromatic hydrocarbon group may have other substituent in addition to the glycidyl group. Examples of a monomer having the naphthalene skeleton include 1,6-bis(glycidyloxy)naphthalene, 1,5-bis(glycidyloxy)naphthalene, 2,6-bis(glycidyloxy)naphthalene, 2,7-bis(glycidyloxy)naphthalene, 2,2'-bis(glycidyloxy)-1,1'-binaphthalene, and 2,7-bis(glycidyloxy)-1-[2-(glycidyloxy)-1-naphthylmethyl]naphthalene. Use of the epoxy resin containing these compounds as constituent monomers enables the epoxy resin composition to reduce the viscosity and enables the resin cured product to improve the heat resistance. Use of the epoxy resin having the polycyclic aromatic hydrocarbon skeleton enables the cured product to improve the heat resistance without excessively increasing the crosslinking density, and thus enables the resin cured product to prevent deterioration of the toughness.

Other examples of a multifunctional epoxy resin other than epoxy resin D or epoxy resin E include bisphenol A type epoxy resin, bisphenol F type epoxy resin, bisphenol S type epoxy resin, phenol novolak type epoxy resin, and cresol novolak type epoxy resin.

As the epoxy resin other than epoxy resin D or epoxy resin E, for example, a monofunctional epoxy resin can be used. Among these, preferably used is an epoxy resin containing an aromatic group, and more preferably used is an epoxy resin containing a glycidyl amine structure or a glycidyl ether structure. Alicyclic epoxy resins can also be suitably used.

These epoxy resins may have a non-reactive substituent in the aromatic ring structure or the like, if necessary. Examples of the non-reactive substituent include alkyl group such as methyl, ethyl, and isopropyl; aromatic group such as phenyl; alkoxyl group; aralkyl group; and halogen group such as chlorine and bromine.

Examples of the thermosetting resin other than epoxy resin include vinyl ester resin, benzoxazine resin, bismaleimide resin, and bismaleimide-triazine resin.

The epoxy resin composition of the present invention may contain, in addition to the resin particles F, a thermoplastic resin as a component to be dissolved in the epoxy resin composition. The thermoplastic resin improves the fracture toughness and impact resistance of the obtained fiber-reinforced composite material. Such thermoplastic resins may be dissolved in the epoxy resin composition during the curing process of the epoxy resin composition.

Specific examples of the thermoplastic resin include polyethersulfone, polysulfone, polyetherimide, and polycarbonate. These may be used alone or in combination of two or more.

The thermoplastic resin is particularly preferably polyethersulfone or polysulfone having a weight average molecular weight (Mw) in the range of 8,000 to 100,000 as measured by gel permeation chromatography. The weight average molecular weight (Mw) of 8,000 or more imparts sufficient impact resistance to the obtained FRP, and that of 100,000 or less does not result in significantly increased viscosity and thus enables the epoxy resin composition to be obtained that exhibits good handleability.

The thermoplastic resin preferably has a uniform molecular weight distribution, and the polydispersity (Mw/Mn), the ratio of the weight average molecular weight (Mw) to the number average molecular weight (Mn), is preferably 1 to 10, and more preferably 1.1 to 5.

The thermoplastic resin preferably has a reactive group having reactivity with the epoxy resin or a functional group forming a hydrogen bond with the epoxy resin. Such thermoplastic resins can improve the dissolution stability of the epoxy resin during the curing process. In addition, fracture toughness, chemical resistance, heat resistance, and wet heat resistance can be imparted to the fiber-reinforced composite material obtained after curing.

The reactive groups having reactivity with the epoxy resin are preferably a hydroxy group, a carboxylic acid group, an imino group, an amino group, and the like. Hydroxy-terminated polyethersulfone is more preferably used due to the particularly excellent impact resistance, fracture toughness and solvent resistance of the obtained fiber-reinforced composite material.

The content of the thermoplastic resin contained in the epoxy resin composition is appropriately adjusted depending on the viscosity. The thermoplastic resin is, when contained, from the viewpoint of impregnation into the reinforcing fiber base material, preferably 0.1 to 10 parts by mass, and more preferably 0.5 to 5 parts by mass with respect to 100 parts by mass of the epoxy resin contained in the epoxy resin composition. Containing the amount of 0.1 parts by mass or more allows the obtained fiber-reinforced composite material to exhibit sufficient fracture toughness and impact resistance. The thermoplastic resin content of 10 parts by mass or less does not result in significantly increased viscosity of the epoxy resin composition, which facilitates impregnation into the reinforcing fiber base material, and thus improves the properties of the obtained fiber-reinforced composite material.

The thermoplastic resin preferably contain reactive aromatic oligomers having amine end groups (hereinafter also simply referred to as "aromatic oligomer").

The epoxy resin composition becomes high molecular weight due to a curing reaction between the epoxy resin and the curing agent during heat curing. The expansion of a two-phase region due to the increased molecular weight causes reaction-induced phase separation by the aromatic oligomer dissolved in the epoxy resin composition. The phase separation causes a two-phase resin structure, in which the cured epoxy resin and the aromatic oligomer are bicontinuous, to be formed in the matrix resin. In addition, having amine end groups, the aromatic oligomers also react with epoxy resins. Since each phase in this bicontinuous two-phase structure is strongly bonded to each other, solvent resistance is also improved.

The bicontinuous structure absorbs external impact on the fiber-reinforced composite material and suppresses crack propagation. As a result, fiber-reinforced composite material produced using epoxy resin compositions containing reactive aromatic oligomers having amine end groups has high impact resistance and fracture toughness.

As the aromatic oligomer, known polysulfones having amine end groups and polyether sulfones having amine end groups can be used. The amine end groups are preferably primary amine ($-NH_2$) end groups.

The aromatic oligomer, when blended into the epoxy resin composition, preferably has a weight average molecular weight of 8,000 to 40,000 as measured by gel permeation chromatography. The weight average molecular weight of 8,000 or more is highly effective for improving the toughness of the matrix resin. In addition, weight average molecular weight of 40,000 or less does not result in excessively increased viscosity of the resin composition, and thus gives processing advantages such as facilitating impregnation of the resin composition into the reinforcing fiber base material.

Aromatic oligomers of commercially available products such as "Virantage DAMS VW-30500 RP (registered trademark)" (manufactured by Solvay Specialty Polymers) can be preferably used.

The form of the thermoplastic resin is preferably particulate before blending into the epoxy resin composition. The particulate form of thermoplastic resin can be uniformly blended and dissolved in the resin composition.

The epoxy resin composition of the present invention may contain other additives such as conductive particles, flame retardants, inorganic fillers, and internal mold release agents.

Examples of the conductive particles include conductive polymer particles such as polyacetylene particles, polyaniline particles, polypyrrole particles, polythiophene particles, polyisothianaphthene particles, and polyethylenedioxythiophene particles; carbon particles; carbon fiber particles; metal particles; and particles of a conductive substance-coated core material composed of inorganic or organic material.

Examples of the flame retardant include a phosphorus-based flame retardant. The phosphorus-based flame retardant may be any flame retardant as long as it contains a phosphorus atom in the molecule, and examples thereof include organic phosphorus compounds such as phosphates, condensed phosphates, phosphazene compounds and polyphosphates, and red phosphorus.

Examples of the inorganic filler include aluminum borate, calcium carbonate, silicon carbonate, silicon nitride, potassium titanate, basic magnesium sulfate, zinc oxide, graphite, calcium sulfate, magnesium borate, magnesium oxide, and silicate minerals. In particular, silicate minerals are preferably used. Examples of commercially available silicate minerals include THIXOTROPIC AGENT DT 5039 (manufactured by Huntsman Japan KK).

Examples of the internal release agent include metallic soaps, vegetable waxes such as polyethylene wax and carnauba wax, fatty acid ester release agents, silicone oils, animal waxes, and fluorine-based nonionic surfactants. These internal mold release agents are preferably blended at a blending amount of 0.1 to 5 parts by mass with respect to 100 parts by mass of the epoxy resin, and more preferably 0.2 to 2 parts by mass. Blending within this range enables the release effect from the mold to be suitably exhibited.

Examples of a commercially available internal release agent include "MOLD WIZ (registered trademark)", INT1846 (manufactured by AXEL PLASTICS RESEARCH LABORATORIES INC.); Licowax S, Licowax P, Licowax OP, Licowax PE190, Licowax PED (manufactured by Clariant Japan K.K.); and stearyl stearate (SL-900A manufactured by Riken Vitamin Co., Ltd.).

[Properties of epoxy resin composition]

The epoxy resin composition of the present invention containing the above curing agent A, curing agent B, curing agent C, epoxy resin D, epoxy resin E, and resin particles F can have the following properties.

The epoxy resin composition of the present invention has a viscosity at 100°C of preferably 300 mPa s or less, more preferably 0.1 to 100 mPa s, and particularly preferably 0.5 to 50 mPa s. The viscosity at 100°C of 300 mPa s or less can facilitate impregnation of the epoxy resin composition into the reinforcing fiber base material, and thus can prevent the obtained fiber-reinforced composite material from forming voids that cause deterioration of the physical properties. Note that the relationship between viscosity and impregnatability also depends on the composition of the reinforcing fiber base material.

A pot life of the epoxy resin composition of the present invention varies depending on the molding conditions

of the composite material, and, for example, when impregnating an epoxy resin composition into a fiber base material for a large composite material at a relatively low impregnation pressure by a resin transfer molding method (RTM method), the pot life of time until the viscosity exceeds 50 mPa s at holding temperature of 100°C is preferably 40 minutes or more, more preferably 60 minutes or more, and particularly preferably 90 minutes or more.

[Method for producing epoxy resin composition]

The epoxy resin composition of the present invention can be produced by mixing the epoxy base resin liquid, the curing agent liquid, and resin particles F. The resin particles F may be mixed with the curing agent liquid after mixing with the epoxy base resin liquid and, or may be mixed with the curing agent liquid and then with the epoxy base resin liquid. The order of mixing does not matter.

The state of the epoxy resin composition may be in a one-component state in which each component is uniformly mixed, or may be in a slurry state in which a part of components is dispersed as solids.

Any conventionally known method may be used to produce the epoxy resin composition. The mixing temperature is, for example, 40 to 180°C, preferably 50 to 160°C, and more preferably 50 to 120°C. The temperature higher than 180°C may cause immediate progress of the curing reaction, which results in a decrease in the impregnation property into the reinforcing fiber base material, and may reduce the physical properties of the cured product. The temperature lower than 40°C may result in high viscosity of the epoxy base resin, which may substantially make the mixing difficult.

Conventionally known devices can be used for the mixing mechanical device. Specific examples thereof include roll mills, planetary mixers, kneaders, extruders, Banbury mixers, mixing vessels equipped with stirring blades, and horizontal mixing tanks. Each component can be mixed in the air or under an inert gas atmosphere. Mixing in the air is preferably performed in an atmosphere with controlled temperature and humidity. For example, the mixing is preferably performed at a constantly controlled temperature of 30°C or lower, and in a low humidity atmosphere with a relative humidity of 50% RH or lower.

[Method for producing curing agent liquid]

The curing agent liquid contains curing agent A, curing agent B, and curing agent C. The curing agent liquid is used after mixing curing agent A, curing agent B, curing agent C, and, if necessary, other components.

The state of the curing agent liquid may be in a one-component state in which each component is uniformly mixed, or may be in a slurry state in which a part of components is dispersed as solids.

Any conventionally known method may be used to produce the curing agent liquid. The mixing temperature is, for example, 50 to 200°C, preferably 50 to 150°C, and more preferably 80 to 120°C. The temperature higher than 200°C may cause the added components to thermally decompose. On the other hand, the temperature lower than 50°C leaves solid of the curing agent A and curing agent C unmelted and unlikely to melt into the curing agent B, making it difficult to obtain a curing agent liquid of a liquid state of the curing agent composition for thermosetting resin.

Conventionally known devices can be used for the mixing mechanical device. Specific examples thereof include roll mills, planetary mixers, kneaders, extruders, Banbury mixers, mixing vessels equipped with stirring blades, and horizontal mixing tanks. Each component can be mixed in the air or under an inert gas atmosphere. Mixing in the air is preferably performed in an atmosphere with controlled temperature and humidity. For example, the mixing is preferably performed at a constantly controlled temperature of 30°C or lower, and in a low humidity atmosphere with a relative humidity of 50% RH or lower.

[Method for producing epoxy base resin liquid]

The epoxy base resin liquid used to produce the epoxy resin composition can be produced by mixing epoxy resin D, epoxy resin E, and, if necessary, resin particles F, and other optional components. The order of mixing does not matter.

The state of the epoxy base resin liquid may be in a one-component state in which each component is uniformly mixed, or may be in a slurry state in which a part of components is dispersed as solids.

Any conventionally known method may be used to produce the epoxy base resin liquid. The mixing temperature is, for example, 40 to 200°C, preferably 50 to 100°C, and more preferably 50 to 90°C. The temperature higher than 200°C may cause partial progress of the self-polymerization reaction in the epoxy resin, which results in a decrease in the impregnation property into the reinforcing fiber base material, and may reduce the physical properties of the cured product produced using the obtained epoxy base resin liquid. The temperature lower than 40°C may result in high viscosity of the epoxy base resin, which may substantially make the mixing difficult.

Conventionally known devices can be used for the mixing mechanical device. Specific examples thereof include roll mills, planetary mixers, kneaders, extruders, Banbury mixers, mixing vessels equipped with stirring blades, and

horizontal mixing tanks. Each component can be mixed in the air or under an inert gas atmosphere. Mixing in the air is preferably performed in an atmosphere with controlled temperature and humidity. For example, the mixing is preferably performed at a constantly controlled temperature of 30°C or lower, and in a low humidity atmosphere with a relative humidity of 50% RH or lower.

[Resin cured product]

The resin cured product can be obtained by curing the epoxy resin composition of the present invention. The obtained resin cured product can have the following properties.

The cure degree of the cured product after heating the epoxy resin composition at 180°C for 30 minutes as evaluated by dielectric cure degree measurement is preferably 75% or more, more preferably 80% or more, and particularly preferably 85% or more from the viewpoint of productivity of the fiber-reinforced composite material.

The glass transition temperature in a dry state (dry-Tg) is preferably 140°C or higher, more preferably 170°C or higher, and particularly preferably 180°C or higher.

The glass transition temperature at saturated water absorption (wet-Tg) is preferably 120°C or higher, and more preferably 150 to 200°C.

The room temperature dry flexural modulus (RTD-FM) is preferably 3.0 GPa or higher, more preferably 3.3 to 10.0 GPa, and more preferably 3.5 to 9.0 GPa, as measured by JIS K7171 method. The above value exceeding 3.0 GPa will impart excellent mechanical properties to the fiber-reinforced composite material obtained using the epoxy resin composition of the present invention.

The flexural modulus after high temperature water absorption (HTW-FM) is preferably 2.4 GPa or higher, more preferably 2.5 to 9.0 GPa, and particularly preferably 2.8 to 8.0 GPa, as measured by JIS K7171 method.

The deformation mode I critical stress intensity factor KIc is preferably 0.7 $MPa \cdot m^{1/2}$ or higher, and more preferably 0.8 to 3.0 $MPa \cdot m^{1/2}$, as measured by ASTM D5045.

[Stitched reinforcing fiber base material]

The present invention is a fiber-reinforced composite material comprising a resin cured product obtained by curing the epoxy resin composition and a stitched reinforcing fiber base material. The fiber-reinforced composite material can be obtained by compositing and curing the stitched reinforcing fiber base material and the epoxy resin.

Examples of reinforcing fiber used for the stitched reinforcing fiber base material include carbon fiber, glass fiber, aramid fiber, silicon carbide fiber, polyester fiber, ceramic fiber, alumina fiber, boron fiber, metal fiber, mineral fiber, rock fiber, and slag fiber.

Among these reinforcing fibers, carbon fiber, glass fiber, and aramid fiber are preferred. Carbon fiber has good specific tensile strength and specific modulus, and provides a lightweight and high-strength fiber-reinforced composite material, and is thus more preferable. That is, the reinforcing fiber yarn group of the stitched reinforcing fiber base material is preferably a carbon fiber yarn group.

Among carbon fibers, polyacrylonitrile (PAN)-based carbon fiber is particularly preferable due to the excellent tensile strength. PAN-based carbon fiber, when used as the reinforcing fiber, preferably has a tensile modulus of 100 to 600 GPa, more preferably 200 to 500 GPa, and more preferably 230 to 450 GPa. The tensile strength is preferably 2,000 to 10,000 MPa, and more preferably 3,000 to 8,000 MPa.

Carbon fiber, when used as reinforcing fiber, preferably has a diameter of 4 to 20 μm, and more preferably 5 to 10 μm. Use of such carbon fiber enables the obtained fiber-reinforced composite material to improve the mechanical properties.

The reinforcing fibers are preferably treated with a sizing agent. In this case, the attached amount of the sizing agent, with respect to the mass of the sizing agent-attached reinforcing fiber, is preferably 0.01 to 10 mass%, more preferably 0.05 to 3.0 mass%, and more preferably 0.1 to 2.0 mass%. The more the sizing agent is attached, the stronger the adhesion between the reinforcing fiber and the matrix resin tends to be, and the less the sizing agent is attached, the more excellent interlaminar toughness the resulting composite material tends to have.

The stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member.

Use of thermoplastic resin fibers as the stitch thread can provide sufficient strength and elongation necessary for the stitching process. A melting point of 180°C or less enables the interface between the stitch thread and the cured product of the epoxy resin composition to be well bonded, and to suppress the generation of microcracks on the fiber-reinforced composite material during subjection to thermal shock cycle.

Examples of thermoplastic resin fibers having a melting point of 180°C or lower include polyester resin fibers and polyamide resin fibers.

The fineness of the stitch thread is preferably 100 dTex or less, and more preferably 20 to 50 dTex. A fineness within this range enables the reinforcing fibers in the stitched reinforcing fiber base material to improve the linearity, and enables a fiber-reinforced composite material with better mechanical properties to be obtained.

In order to improve the interlaminar toughness of the resulting fiber-reinforced composite material, a nonwoven fabric of thermoplastic resin fibers may be arranged on one side of the stitched reinforcing fiber base material. In addition, a nonwoven fabric is arranged on one side of a stitched reinforcing fiber base material, and then the stitched reinforcing fiber base material may be further laminated to form a multiaxial fabric.

Examples of fibers to constitute the nonwoven fabric of thermoplastic resin fibers include polyester resin fibers, polyamide resin fibers, polyethersulfone resin fibers, polysulfone resin fibers, polyetherimide resin fibers, polycarbonate resin fibers, and fibers composed of resin mixtures thereof.

The melting point of the fibers constituting the nonwoven fabric of thermoplastic resin fibers is preferably equal to or lower than the curing temperature of the epoxy resin composition. This condition enables the interface between the stitch thread and the cured product of the epoxy resin composition to be well bonded, and the interlaminar toughness of the resulting fiber-reinforced composite material to be efficiently improved, and further to suppress the generation of microcracks on the fiber-reinforced composite material during subjection to thermal shock cycle.

The basis weight of the sheet-shaped reinforcing fiber yarn group of the drawn and aligned reinforcing fiber bundles can be set appropriately depending on the applications of the fiber-reinforced composite material, and is, for example, 100 to 300 g/m$^2$, and preferably 150 to 250 g/m$^2$. The thickness per layer of the sheet-shaped reinforcing fiber yarn group of the drawn and aligned reinforcing fiber bundles is preferably 0.01 to 3 mm, and more preferably 0.05 to 1.5 mm.

[Physical properties of fiber-reinforced composite material]

The fiber-reinforced composite material of the present invention has a compression-after-impact (CAI) strength (impact energy 30.5 J), as measured by ASTM D7136, of preferably 240 MPa or more, more preferably 250 to 400 MPa, and more preferably 260 to 380 MPa.

The fiber-reinforced composite material of the present invention has a room temperature dry open-hole compression strength (RTD-OHC), as measured by SACMA SRM3, of preferably 260 MPa or more, more preferably 280 to 450 MPa, and more preferably 300 to 400 MPa.

The fiber-reinforced composite material provided by the present invention has an open-hole compression after high temperature water absorption (HTW-OHC) strength, as measured by SACMA SRM3, of preferably 200 MPa or more, more preferably 220 to 400 MPa, and more preferably 240 to 350 MPa.

[Method for producing fiber-reinforced composite material]

A method for compositing a stitched reinforcing fiber base material and an epoxy resin composition to obtain the fiber-reinforced composite material of the present invention is preferably a method in which the stitched reinforcing fiber base material and an uncured epoxy resin composition are composited in advance, and then the uncured epoxy resin composition is cured. This compositing is preferably performed by impregnation.

That is, the present invention is a method for producing a fiber-reinforced composite material, comprising a step of impregnating a stitched reinforcing fiber base material placed in a mold with an epoxy resin composition and performing heat curing, wherein

the epoxy resin composition is an epoxy resin composition containing curing agent A, curing agent B, curing agent C, epoxy resin D, epoxy resin E, and resin particles F;
the curing agent A is an aromatic diamine having a substituent selected from an alkyl group and a halogen group at each of two ortho positions of an amino group;
the curing agent B is an aromatic polyamine that is liquid at 25°C;
the curing agent C is a phenylenediamine derivative;
the epoxy resin D is tetraglycidyl-3,4'-diaminodiphenyl ether;
the epoxy resin E is an epoxy resin composed of a bifunctional monomer containing an amine-type glycidyl group; and
the stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member.

By this producing method, the fiber-reinforced composite material of the present invention can be produced.

The method for producing a fiber-reinforced composite material including a step of impregnating an epoxy resin composition into a stitched reinforcing fiber base material arranged in a mold and performing heat curing preferably uses

the RTM method from the viewpoint of efficiently obtaining a complex-shaped fiber-reinforced composite material. The RTM method is a method for obtaining a fiber-reinforced composite material by impregnating a reinforcing fiber base material placed in a mold with a liquid epoxy resin composition and curing the composition.

The impregnation pressure when impregnating the reinforcing fiber base material with the epoxy resin composition by the RTM method is appropriately determined in consideration of the viscosity and resin flow of the epoxy resin composition. A specific impregnation pressure is, for example, 0.001 to 10 MPa, and preferably 0.01 to 1 MPa. When obtaining a fiber-reinforced composite material using the RTM method, the viscosity of the epoxy resin composition at 100°C is preferably 1 to 200 mPa·s.

The mold used in the RTM method may be a closed mold made of a rigid material, or an open mold made of a rigid material and a flexible film (bag).

In the latter case, the stitched reinforcing fiber base material can be placed between an open mold of the rigid material and the flexible film. There can be used rigid materials of, for example, metals such as steel and aluminum, fiber-reinforced plastics, wood, and gypsum. There can be used materials for the flexible film of, for example, polyamide, polyimide, polyester, fluororesin, and silicone resin.

When a closed mold made of a rigid material is used in the RTM method, it is a common practice to press and clamp the mold and to pressurize and inject the epoxy resin composition. In this case, a suction port may be provided separately from the injection port and connected to a vacuum pump for suction. The epoxy resin composition may be injected only under atmospheric pressure by suction without using special pressurizing means. This method allows to provide a plurality of suction ports to produce a large-sized member, and thus can be suitably used.

When an open mold made of a rigid material and a flexible film are used in the RTM method, the epoxy resin composition may be injected only under atmospheric pressure by suction without using special pressurizing means. A resin diffusion medium is effectively used for achieving good impregnation by injection only under atmospheric pressure. Further, a gel coat is preferably applied to a surface of the rigid material before placing of the stitched reinforcing fiber base material.

After impregnating the stitched reinforcing fiber base material with the epoxy resin composition, heat curing is performed. The mold temperature during heat curing is generally selected as being higher than the mold temperature during injection of the epoxy resin composition. The mold temperature during heat curing is preferably 80 to 200°C. The heat curing time is preferably 1 minute to 20 hours. After heat curing is completed, the fiber-reinforced composite material is demolded and taken out. The obtained fiber-reinforced composite material may then be post-cured by heating at a higher temperature. The temperature for the post-curing is preferably 150 to 200°C, and the time is preferably 1 minute to 4 hours.

[Examples]

The present invention will be described in more detail below with reference to examples. The components and test methods used in the Examples and Comparative examples are as follows. A fiber-reinforced composite material is sometimes abbreviated as "FRP", and specifically a carbon fiber reinforced composite material as "CFRP".

[Component]

(1) Curing agent A

- 4,4'-Diamino-3,3'-diisopropyl-5,5'-dimethyldiphenylmethane (Lonzacure M-MIPA (product name) manufactured by Lonza, hereinafter abbreviated as "M-MIPA", melting point 70°C, solid at 25°C)
- 4,4'-Diamino-3,3'-diethyl-5,5'-dimethyldiphenylmethane (MED-J (product name) manufactured by KUMIAI CHEMICAL INDUSTRY CO., LTD., hereinafter abbreviated as "MED-J", melting point 76 °C, solid at 25°C)

(2) Curing agent B

- Diethyltoluenediamine (Heart Cure 10 (product name) manufactured by KUMIAI CHEMICAL INDUSTRY CO., LTD., hereinafter abbreviated as "DETDA", liquid at 25°C)
- Dimethylthiotoluene diamine (Heart Cure 30 (product name) manufactured by KUMIAI CHEMICAL INDUSTRY CO., LTD., hereinafter abbreviated as "DMTDA", liquid at 25°C)

(3) Curing agent C

- m-Phenylenediamine (manufactured by FUJIFILM Wako Pure Chemical Corporation, hereinafter abbreviated as "MPD", melting point 65°C, solid at 25°C)

(4) Epoxy resin D

- Tetraglycidyl-4,4'-diaminodiphenylmethane (Araldite MY721 (product name) manufactured by Huntsman Corporation, hereinafter abbreviated as "4,4'-TGDDM")
- Tetraglycidyl-3,4'-diaminodiphenyl ether (Synthesized by the method in Synthesis Example 1, hereinafter abbreviated as "3,4'-TGDDE")

(5) Epoxy resin E

- N,N-Diglycidyl-o-toluidine (GOT (product name) manufactured by Nippon Kayaku Co., Ltd., hereinafter abbreviated as "GOT")
- N,N-Diglycidylaniline (GAN (product name) manufactured by Nippon Kayaku Co., Ltd., hereinafter abbreviated as "GAN")

(6) Other epoxy resins

- Bisphenol A-diglycidyl ether (jER825 (product name) manufactured by Mitsubishi Chemical Corporation, hereinafter abbreviated as "DGEBA")

(7) Resin particles F

- MX-416 (MX-416 (product name) manufactured by Kaneka Corporation, average particle size 0.11 μm, a masterbatch in which a particulate butadiene rubber component is dispersed in a glycidylamine-type tetrafunctional epoxy resin to a concentration of 25 mass%) (the glycidylamine-type tetrafunctional epoxy resin in the product contains 75 mass% of tetraglycidyl-4,4'-diaminodiphenylmethane, which corresponds to the epoxy resin D of the present invention)

(8) Carbon fiber strand

- Carbon fiber 1: Tenax (registered trademark) IMS65 E23 830 tex (carbon fiber strand, tensile strength 5.8 GPa, tensile modulus 290 GPa, sizing agent attached amount 1.2 mass%, manufactured by Teijin Limited)

(9) Thermoplastic resin nonwoven fabric

- Nonwoven fabric 1: Nonwoven fabric with a fiber basis weight of 6 $g/m^2$, melting point of 170°C, produced by a spunbonding method using polyamide 12 resin

(10) Stitch thread

- Stitch thread 1: Polyamide fiber Grilon (registered trademark) K-140, fineness: 38 dTex, manufactured by EMS-CHEMIE
- Stitch thread 2: Polyester fiber 33T-12-SOD0, fineness: 33 dTex, manufactured by KB Seiren Ltd.

(11) Carbon fiber multilayer fabric

- Carbon fiber multiaxial fabric 1: Unidirectionally drawn and aligned Carbon fiber 1 is formed into a sheet shape of 190 g/$m^2$ per layer, and Nonwoven fabric 1 is arranged on one side of the sheet-shaped carbon fiber yarn group, 4 sheets of which are laminated at the angles of (+45/V1/90/V1/-45/V1/0/V1) and woven using stitch thread 1 (total basis weight of carbon fiber in fabric base material: 760 g/$m^2$). Here, V1 indicates nonwoven fabric 1.
- Carbon fiber multiaxial fabric 2: Unidirectionally drawn and aligned Carbon fiber 1 is formed into a sheet shape of 190 g/$m^2$ per layer, and Nonwoven fabric 1 is arranged on one side of the sheet-shaped carbon fiber yarn group, 4 sheets of which are laminated at the angles of (0/V1/-45/V1/90/V1/+45/V1) and woven using stitch thread 1 (total basis weight of carbon fiber in fabric base material: 760 g/$m^2$). Here, V1 indicates nonwoven fabric 1.
- Carbon fiber multiaxial fabric 3: Unidirectionally drawn and aligned Carbon fiber 1 is formed into a sheet shape of 190 g/$m^2$ per layer, and Nonwoven fabric 1 is arranged on one side of the sheet-shaped carbon fiber yarn group, 4 sheets of which are laminated at the angles of (+45/V1/90/V1/-45/V1/0/V1) and woven using stitch thread 2 (total basis weight of carbon fiber in fabric base material: 760 g/$m^2$). Here, V1 indicates nonwoven fabric 1.
- Carbon fiber multiaxial fabric 4: Unidirectionally drawn and aligned Carbon fiber 1 is formed into a sheet shape of 190 g/$m^2$ per layer, and Nonwoven fabric 1 is arranged on one side of the sheet-shaped carbon fiber yarn group, 4 sheets of which are laminated at the angles of (0/V1/-45/V1/90/V1/+45/V1) and woven using stitch thread 2 (total basis weight of carbon fiber in fabric base material: 760 g/$m^2$). Here, V1 indicates nonwoven fabric 1.

(12) Synthesis example of epoxy resin

Synthesis was performed by the method of Synthesis Example 1 below.

Synthesis Example 1: Synthesis of 3,4'-TGDDE

Epichlorohydrin (1,110.2 g, 12.0 mol) was charged in a four-necked flask equipped with a thermometer, a dropping funnel, a condenser, and a stirrer, and heated to a temperature of 70°C while purging with nitrogen, thereto added dropwise over 4 hours was 3,4'-diaminodiphenyl ether (200.2 g, 1.0 mol) dissolved in ethanol (1,000 g). The reaction solution was further stirred for 6 hours to complete the addition reaction to obtain N,N,N',N'-tetrakis(2-hydroxy-3-chloropropyl)-3,4'-diaminodiphenyl ether. Subsequently, the inside of the flask was cooled to a temperature of 25°C, thereto added dropwise over 2 hours was a 48 mass% NaOH aqueous solution (500.0 g, 6.0 mol), and the mixture was further stirred for 1 hour. After completion of the cyclization reaction, ethanol was distilled off, extraction was performed with toluene (400 g), and washing was performed twice with 5% saline. Toluene and epichlorohydrin were removed from the organic layer under reduced pressure to give a brown viscous liquid (361.7 g, yield 85.2%). The purity of the main product of 3,4'-TGDDE was 84% (HPLC area%).

[Evaluation method]

(1) Resin composition properties

(1-1) Preparation of epoxy resin composition

Epoxy resin and resin particles were weighed in the proportions shown in Table 1, and mixed using a stirrer at 80°C for 30 minutes to prepare an epoxy base resin liquid. Curing agent components were weighed in the proportions shown in Table 1 and mixed using a stirrer at 80°C for 30 minutes to prepare a curing agent liquid. The epoxy base resin liquid and the curing agent liquid prepared separately were mixed using a stirrer at 80°C for 30 minutes to prepare an epoxy resin composition. Note that, in the compositions shown in Table 1, the glycidyl groups of the epoxy resin and the amino groups of the curing agent are equivalent.

(1-2) Liquid state retention property of curing agent liquid

The curing agent liquid prepared in (1-1) above was stored at 25°C for one week, and it was visually examined whether solid components were precipitated. Evaluation was performed: "OK" was given when there was no precipitation, and "NG" was given when precipitation was observed.

(1-3) Initial viscosity and pot life

The viscosity was measured at 100°C using a B-type viscometer TVB-15M manufactured by Toki Sangyo Co., Ltd. The minimum measured value obtained immediately after the start of measurement was taken as the initial viscosity, and the time until the viscosity reached 50 mPa·s was taken as the pot life. ">120" in the table means "more than 120".

(1-4) Curing properties after heating at 180°C for 30 minutes (DEA cure degree $\alpha$)

Curing property was evaluated as follows: curing property data were measured from a resin cured product obtained by heating an uncured resin at 180°C for 30 minutes using a dielectric analyzer DEA288 Ionic manufactured by NETZSCH, and DEA cure degree $\alpha$ was calculated from the data by the following formula and evaluated. Note that, when the cure degree $\alpha$ is 80% or more, the epoxy resin composition can be evaluated as having a 30-minute curing property.

$$\alpha(t=30) = (\log\varepsilon''_{0}-\log\varepsilon''_{t=30})/(\log\varepsilon''_{0}-\log\varepsilon''_{\infty})\times 100$$

(Wherein $\varepsilon''_0$ is the maximum value of dielectric loss at the start of measurement, $\varepsilon''_{t=30}$ is the dielectric loss value when the measurement time is 30 minutes, and $\varepsilon''_\infty$ is the dielectric loss value when the measurement time is 180 minutes.)

Measurement conditions

Measurement temperature: 180±2°C isothermal
Measurement frequency: 1Hz
Measurement sensor: IDEX 115/35 manufactured by NETZSCH

(2) Resin cured product properties

(2-1) Preparation of resin cured product

The epoxy resin composition prepared in (1-1) above was defoamed in vacuum for 60 minutes, and then injected into a stainless steel mold set to give a thickness of 4 mm using a 4 mm-thick Teflon (registered trademark) resin spacer. The composition was heat cured at a temperature of 180°C for 30 minutes to obtain a resin cured product having a thickness of 4 mm.

(2-2) Glass transition temperature after water absorption (wet-Tg)

The glass transition temperature was measured in accordance with the SACMA 18R-94 method. The resin cured product obtained in (2-1) above was cut and polished to prepare a test piece with dimensions of 50 mm × 6 mm × 2 mm. Using a pressure cooker (HASTEST PC-422R8, manufactured by ESPEC Corp.), the prepared resin test piece was subjected to water absorption treatment under the conditions of 121°C and 24 hours. Using a dynamic viscoelasticity measuring device Rheogel-E400 manufactured by UBM, under the conditions of the measurement frequency of 1 Hz, the temperature rise rate of 5 °C/min, and the strain of 0.0167%, the distance between the chucks was set to 30 mm, and the storage elastic modulus E' of the resin test piece subjected to water absorption treatment was measured in the temperature range of from 50°C to the rubber elastic region. LogE' was plotted against temperature, and the temperature obtained from the intersection of the approximate straight line of logE' in the flat region and that in the transition region was recorded as the glass transition temperature (wet-Tg).

(2-3) Room temperature dry resin flexural modulus (RTD-FM)

The test was performed in accordance with the JIS K7171 method. The resin cured plate obtained in (2-1) above was used to prepare a resin test piece with dimensions of 80 mm × 10 mm × 4 mm (thickness h). A bending test was performed under the conditions of an ambient temperature at 25°C, a distance L between fulcrums of 16 × h (thickness), and a test speed of 2 mm/min to measure bending strength and flexural modulus.

(2-4) Resin cured product toughness (deformation mode I critical stress intensity factor KIc)

In accordance with ASTM D5045, the toughness (KIc) was measured using a universal testing machine (Autograph manufactured by Shimadzu Corporation). The test was conducted in accordance with ASTM D5045 method. The resin cured plate obtained in (2-1) above was used to prepare a resin test piece with dimensions of 50 mm × 8 mm (width W) × 4 mm. The crack length 'a' was adjusted so that $0.45 \leq a/W \leq 0.55$. Note that, length to the crack tip was measured by observing the fracture surface after the fracture test with an optical microscope, and the average value of the crack lengths on both surfaces of the test piece was adopted as the crack length 'a'.

(3) Properties of CFRP

(3-1) Preparation of CFRP

Carbon fiber multiaxial fabric 1 and Carbon fiber multiaxial fabric 2 each were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, hoses for forming a resin inlet port and a resin outlet port were arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared in (1-1) above was heated to 100°C and injected into the vacuum system through the resin inlet port.

The injected epoxy resin composition was filled in the bag and impregnated into the laminate, and then the temperature was raised to 180°C and held at 180°C for 30 minutes to obtain carbon fiber-reinforced composite material (CFRP).

(3-2) Compression-after-impact (CAI) strength

The CFRP obtained in (3-1) above was cut into a size of width 101.6 mm × length 152.4 mm to obtain a test piece for a compression-after-impact (CAI) strength test. The test was performed in accordance with ASTM D7136. The dimensions of each test piece were measured, and the test piece was subjected to an impact test by applying an impact energy of 30.5 J using a drop weight impact tester (Dynatup manufactured by Instron). After the impact, the damaged area of the test piece was measured with an ultrasonic crack inspector (SDS3600, HIS3/HF manufactured by Kraut Kramer). In the strength test after impact for the test piece, 4 strain gauges in total per body were attached to the impacted test piece, 2 gauges each at a position of 25.4 mm from the left side and right side and 25.4 mm from the top on the front side, and the same on the back side, and then the crosshead speed of the testing machine (Autograph manufactured by Shimadzu Corporation) was set at 1.27 mm/min, and a load was applied until the test piece broke.

(3-3) Room temperature dry open-hole compression strength (RTD-OHC)

The CFRP obtained in (3-1) above was cut into a piece with a size of width 38.1 mm × length 304.8 mm, and at the center of the piece, a hole with a diameter of 6.35 mm was drilled to obtain a test piece for room temperature dry open-hole compression strength (RTD-OHC) test.

The test was performed in accordance with SACMA SRM3 at an ambient temperature of 25°C, and the open hole compression strength was calculated from the maximum point load.

(3-4) Microcrack properties

A test piece (width 80 mm × length 50 mm) was prepared. The test piece was subjected to 1000 thermal cycles using a thermal shock tester (TSA-73EH-W manufactured by ESPEC Co., Ltd.). One thermal cycle was designed to consist of a flat region of -55°C for 15 minutes, followed by a ramp region to a temperature of 70°C for 15 minutes,

followed by a flat region of 70°C for 15 minutes, and followed by a ramp region returning to -55°C for 15 minutes, and the cycle was repeated 1000 times.

The fiber-reinforced composite material test piece after the thermal shock test above was examined by microscopic observation as to whether microcracks were generated in the cross section inside. Observation was performed at 200 times magnification using a microscope VHX-5000 manufactured by Keyence Corporation.

Specifically, the test piece after the thermal shock test (width 80 mm × length 50 mm) was cut into a size of width 40 mm × length 25 mm, that is, the test piece after the thermal shock test was cut into four equal pieces, the cut surfaces in the thickness direction were mirror-polished, and the cut surfaces of the long side and short side were used as observation surface and observed. The observation range of microcracks by microscopic observation was set to 50 $mm^2$ or more. Evaluation was performed: "OK" was given when there was no microcrack, and "NG" was given when microcracks were observed.

(4) Average particle size

The cross section of the resin cured product was observed at a magnification of 25,000 times with a scanning electron microscope or transmission electron microscope, and the diameters of at least 50 particles are measured, which were averaged to obtain the average particle size. In the above observation, when the particle was not perfectly circular, that is, when the particle was elliptical, the maximum diameter of the particle was taken as the particle size of the particle.

[Example 1]

(Preparation of epoxy resin composition)

The epoxy resin and resin particles were weighed in the proportions shown in Table 1, and mixed using a stirrer at 80°C for 30 minutes to prepare an epoxy base resin liquid. In addition, curing agent components were weighed in the proportions shown in Table 1 and mixed using a stirrer at 80°C for 30 minutes to prepare a curing agent liquid. The epoxy base resin liquid and the curing agent liquid prepared separately were mixed using a stirrer at 80°C for 30 minutes to prepare an epoxy resin composition.

Table 1 shows the properties of the obtained epoxy resin compositions. Note that, in the epoxy resin compositions shown in Table 1, the glycidyl groups contained in the epoxy resin and the amino groups of the curing agent are equivalent. The ratio of the total number of active hydrogens of amine groups with respect to the total number of epoxy groups contained in the epoxy resin composition is as shown in Table 1.

(Preparation of resin cured product)

The epoxy resin composition obtained above was defoamed in a vacuum for 60 minutes, and then injected into a stainless steel mold set to give a thickness of 4 mm using a 4 mm-thick Teflon (registered trademark) resin spacer. The composition was heat cured at a temperature of 180°C for 30 minutes to obtain a resin cured product having a thickness of 4 mm.

Table 1 shows the properties of the obtained resin cured products. The resin cured products had a wet-Tg of 150°C or higher, a flexural modulus of 3.0 GPa or higher, and a KIc of 0.7 MPa·$m^{1/2}$ or higher, which indicates high mechanical properties.

(Production of fiber-reinforced composite material)

Next, Carbon fiber multiaxial fabric 1 and Carbon fiber multiaxial fabric 2 were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, hoses for forming a resin inlet port and a resin outlet port were arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared above was heated to 100°C and injected into the vacuum system through the resin inlet port.

The injected epoxy resin composition was filled in the bag and impregnated into the laminate, and then the temperature was raised to 180°C and heat curing was performed at 180°C for 30 minutes to obtain carbon fiber-reinforced composite materials (CFRP). Table 1 shows the properties of the obtained CFRP. In all examples, exhibited were high CAI of 250 MPa or higher and excellent RTD-OHC of 300 MPa or higher. In addition, the thermal shock test revealed

the good microcrack properties.

[Examples 2 to 11]

The procedure was conducted in the same manner as in Example 1, except that the composition was changed as shown in Table 1. Table 1 shows the evaluation results.

[Table 1]

| | | (Ex: Example)- | Ex 1 | Ex 2 | Ex 3 | Ex 4 | Ex 5 | Ex 6 | Ex 7 | Ex 8 | Ex 9 | Ex 10 | Ex 11 |
|---|---|---|---|---|---|---|---|---|---|---|---|---|---|
| Curing agent A | M-MIPA | (parts by mass) | 16.8 | 17.2 | 16.8 | 22.5 | 18.5 | 18.9 | | | 16.8 | 17.2 | 16.8 |
| | MED-J | (parts by mass) | | | | | | | 16.8 | 17.2 | | | |
| Curing agent B | DETDA | (parts by mass) | 23.1 | 23.7 | 23.1 | 20.3 | 18.5 | 18.9 | 23.1 | 23.7 | 11.1 | 11.7 | 23.1 |
| | DMTDA | (parts by mass) | | | | | | | | | 10.0 | 10.0 | |
| Curing agent C | MPD | (parts by mass) | 2.1 | 2.2 | 2.1 | 2.3 | 4.1 | 4.2 | 2.1 | 2.2 | 4.1 | 4.2 | 2.1 |
| Epoxy resin D | 3,4'-TGDDE | (parts by mass) | 42.5 | 42.5 | 47.5 | 47.5 | 42.5 | 42.5 | 42.5 | 42.5 | 42.5 | 42.5 | 12.5 |
| | 4,4'-TGDDM | (parts by mass) | | | | | | | | | | | 30.0 |
| Epoxy resin E | GOT | (parts by mass) | 35.0 | | 30.0 | | 35.0 | | 35.0 | | 35.0 | | 35.0 |
| | GAN | (parts by mass) | | 35.0 | | 30.0 | | 35.0 | | 35.0 | | 35.0 | |
| Other epoxy resins | DGEBA | (parts by mass) | | | | | | | | | | | |
| Resin particle F | MX-416 | (parts by mass) | 30.0 | 30.0 | 30.0 | 30.0 | 30.0 | 30.0 | 30.0 | 30.0 | 30.0 | 30.0 | 30.0 |
| Ratio of each component of curing agent liquid | Total amount of curing agent | (parts by mass) | 42 | 43 | 42 | 45 | 41 | 42 | 42 | 43 | 42 | 43 | 42 |
| | Ratio of curing agent A | (mass%) | 40 | 40 | 40 | 50 | 45 | 45 | 40 | 40 | 40 | 40 | 40 |
| | Ratio of curing agent B | (mass%) | 55 | 55 | 55 | 45 | 45 | 45 | 55 | 55 | 50 | 50 | 55 |
| | Ratio of curing agent C | (mass%) | 5 | 5 | 5 | 5 | 10 | 10 | 5 | 5 | 10 | 10 | 5 |

(continued)

| (Ex: Example)- | | | Ex 1 | Ex 2 | Ex 3 | Ex 4 | Ex 5 | Ex 6 | Ex 7 | Ex 8 | Ex 9 | Ex 10 | Ex 11 |
|---|---|---|---|---|---|---|---|---|---|---|---|---|---|
| Ratio of each component of epoxy base resin liquid | Total amount of epoxy resin | (parts by mass) | 100 | 100 | 100 | 100 | 100 | 100 | 100 | 100 | 100 | 100 | 100 |
| | Ratio of epoxy resin D | (mass%) | 65 | 65 | 60 | 60 | 65 | 65 | 65 | 65 | 65 | 65 | 65 |
| | Ratio of epoxy resin E | (mass%) | 35 | 35 | 30 | 30 | 35 | 35 | 35 | 35 | 35 | 35 | 35 |
| | Ratio of other epoxy resins | (mass%) | 0 | 0 | 0 | 0 | 0 | 0 | 0 | 0 | 0 | 0 | 0 |
| Resin particle F | Mass ratio of resin particles with respect to total amount of epoxy resin (100 mass%) | (mass%) | 5 | 5 | 5 | 5 | 5 | 5 | 5 | 5 | 5 | 5 | 5 |
| Ratio of total number of active hydrogens in a mine groups with respect to total number of epoxy groups | | | 1.0 | 1.0 | 1.0 | 1.0 | 1.0 | 1.0 | 1.0 | 1.0 | 1.0 | 1.0 | 1.0 |
| Liquid state retentio n property of curing agent liquid | | | OK | OK | OK | OK | OK | OK | OK | OK | OK | OK | OK |
| Resin composition properties | Initial viscosity (100°C) | (mPa s) | 24 | 28 | 27 | 33 | 26 | 29 | 23 | 26 | 25 | 28 | 26 |
| | Pot life (100°C) | (min) | >120 | 80 | >120 | 73 | 110 | 65 | >120 | 70 | >120 | 98 | >120 |
| | DEA cure degree α (after heating at 180°C for 30 minutes) | (%) | 80 | 90 | 82 | 90 | 86 | 90 | 85 | 91 | 78 | 85 | 82 |
| Resin cured product properties | wet-Tg | (°C) | 153 | 151 | 157 | 157 | 155 | 154 | 156 | 155 | 158 | 161 | 157 |
| | RTD-FM | (GPa) | 3.5 | 3.7 | 3.5 | 3.7 | 3.5 | 3.9 | 3.6 | 3.7 | 3.6 | 3.8 | 3.3 |
| | KIc | ($MPa \cdot m^{1/2}$) | 0.86 | 0.81 | 0.87 | 0.84 | 0.81 | 0.78 | 0.83 | 0.79 | 0.85 | 0.82 | 0.85 |
| Carbon fiber base material | Type of stitch thread | | thread 1 | thread 1 | thread 1 | thread 1 | thread 1 | thread 1 | thread 1 | thread 1 | thread 1 | thread 1 | thread 1 |

(continued)

| (Ex: Example)- | | | Ex 1 | Ex 2 | Ex 3 | Ex 4 | Ex 5 | Ex 6 | Ex 7 | Ex 8 | Ex 9 | Ex 10 | Ex 11 |
|---|---|---|---|---|---|---|---|---|---|---|---|---|---|
| CFRP properties | CAI | (MPa) | 287 | 293 | 280 | 279 | 275 | 282 | 271 | 268 | 295 | 301 | 279 |
| | RTD-OHC | (MPa) | 329 | 342 | 315 | 332 | 338 | 327 | 320 | 325 | 333 | 345 | 317 |
| | Microcrack properties | | OK | OK | OK | OK | OK | OK | OK | OK | OK | OK | OK |

[Comparative examples 1 to 8]

The procedure was conducted in the same manner as in Example 1, except that the composition was changed as shown in Table 2. Table 2 shows the evaluation results.

[Table 2]

| (Cex: Comparative example)- | | | Cex 1 | Cex 2 | Cex 3 | Cex 4 | Cex 5 | Cex 6 | Cex 7 | Cex 8 | Cex 9 |
|---|---|---|---|---|---|---|---|---|---|---|---|
| Curing agent A | M-MIPA | (parts by mass) | 67.0 | | 24.0 | | 24.0 | 17.5 | 16.8 | 16.8 | 16.8 |
| | MED-J | (parts by mass) | | | | | | | | | |
| Curing agent B | DETDA | (parts by mass) | | | | | | 15.8 | 23.1 | 23.1 | 23.1 |
| | DMTDA | (parts by mass) | | 45.3 | | | 24.0 | | | | |
| Curing agent C | MPD | (parts by mass) | | | 16.0 | 25.0 | | 1.8 | 2.1 | 2.1 | 2.1 |
| Epoxy resin D | 3,4'-TGDDE | (parts by mass) | 50.0 | 42.0 | 42.5 | 45.5 | 42.5 | | 77.0 | 65.0 | 42.5 |
| | 4,4'-TGDDM | (parts by mass) | | | | | | | | | |
| Epoxy resin E | GOT | (parts by mass) | 35.0 | 35.0 | 35.0 | 35.0 | 35.0 | 35.0 | | 35.0 | 35.0 |
| | GAN | (parts by mass) | | | | | | | | | |
| Other epoxy resins | DGEBA | (parts by mass) | | | | | | 44.0 | | | |
| Resin particle F | MX-416 | (parts by mass) | 20.0 | 30.6 | 30.0 | 26.0 | 30.0 | 28.0 | 30.0 | | 30.0 |
| Ratio of each component of curing agent liquid | Total amount of curing agent | (parts by mass) | 67 | 45 | 40 | 25 | 48 | 35 | 42 | 42 | 42 |
| | Ratio of curing agent A | (mass%) | 100 | 0 | 60 | 0 | 50 | 40 | 40 | 40 | 40 |
| | Ratio of curing agent B | (mass%) | 0 | 100 | 0 | 0 | 50 | 55 | 55 | 55 | 55 |
| | Ratio of curing agent C | (mass%) | 0 | 0 | 40 | 100 | 0 | 5 | 5 | 5 | 5 |

(continued)

| (Cex: Comparative example)- | | | Cex 1 | Cex 2 | Cex 3 | Cex 4 | Cex 5 | Cex 6 | Cex 7 | Cex 8 | Cex 9 |
|---|---|---|---|---|---|---|---|---|---|---|---|
| Ratio of each component of epoxy base resin liquid | Total amount of epoxy resin | (parts by mass) | 100 | 100 | 100 | 100 | 100 | 100 | 100 | 100 | 100 |
| | Ratio of epoxy resin D | (mass%) | 65 | 65 | 65 | 65 | 65 | 0 | 100 | 65 | 65 |
| | Ratio of epoxy resin E | (mass%) | 35 | 35 | 35 | 35 | 35 | 35 | 0 | 35 | 35 |
| | Ratio of other epoxy resins | (mass%) | 0 | 0 | 0 | 0 | 0 | 65 | 0 | 0 | 0 |
| Resin particle F | Mass ratio of resin particles with respect to total amount of epoxy resin (100 mass%) | (mass%) | 3 | 5 | 5 | 5 | 5 | 5 | 5 | 0 | 5 |
| Ratio of total number of active hydrogens in amine groups with respect to total number of epoxy groups | | | 1.0 NG | 1.0 | 1.1 | 1.1 | 0.9 | 0.9 | 0.9 | 1.0 | 1.0 |
| Liquid state retention property of curing agent liquid | | | | OK | NG | NG | OK | OK | OK | OK | OK |
| Resin composition properties | Initial viscosity (100°C) | (mPa s) | 32 | - | - | - | - | 12 | 142 | 16 | 24 |
| | Pot life (100°C) | (min) | >120 | - | - | - | - | >120 | - | >120 | >120 |
| | DEA cure degree α (after heating at 180°C for 30 minutes) | (%) | 24 | 7 | - | - | 33 | 82 | 92 | 77 | 80 |
| Resin cured product properties | wet-Tg | (°C) | 153 | - | - | - | - | 112 | - | 158 | 153 |
| | RTD-FM | (GPa) | 3.8 | - | - | - | - | - | - | 3.9 | 3.5 |
| | KIc | (MPa·m$^{1/2}$) | 0.92 | - | - | - | - | - | - | 0.52 | 0.86 |
| Carbon fiber base material | Type of stitch thread | | thread 1 | - | - | - | - | - | - | - | thread 2 |
| CFRP properties | CAI | (MPa) | 321 | - | - | - | - | - | - | - | - |
| | RTD-OHC | (MPa) | 330 | - | - | - | - | - | - | - | - |
| | Microcrack properties | | OK | - | - | - | - | - | - | - | NG |

In Comparative examples 1, 3 and 4, since curing agent B was not used, solids precipitated within one week in any of these.

In Comparative examples 1, 2 and 5, since curing agent C was not used, the DEA cure degree was significantly decreased, and fast curability was not exhibited.

In Comparative example 6, since epoxy resin D was not used, the wet-Tg of the obtained resin cured product was as low as 112°C.

In Comparative example 7, since epoxy resin E was not used, the initial viscosity of the resin composition was as high as 142 mPa s.

In Comparative example 8, since resin particles F were not used, the KIc of the obtained resin cured product was as low as 0.52 MPa·$m^{1/2}$.

[Comparative example 9]

The procedure was conducted in the same manner as in Example 1, except that carbon fiber multiaxial fabric 3 and carbon fiber multiaxial fabric 4 were used respectively instead of carbon fiber multiaxial fabric 1 and carbon fiber multiaxial fabric 2. Table 2 shows the evaluation results.

In Comparative example 9, as a result of the thermal shock test for the obtained carbon fiber-reinforced composite material (CFRP), microcracks were observed in the cross section because stitch thread 2 was used.

[Industrial Applicability]

Use of the fiber-reinforced composite material of the present invention enables production of a fiber-reinforced composite material having high mechanical properties, high productivity, and excellent microcrack properties. The fiber-reinforced composite material of the present invention can be used, for example, as materials of automobiles and aircraft.

## Claims

1. A fiber-reinforced composite material comprising: a resin cured product obtained by curing an epoxy resin composition containing a curing agent A, a curing agent B, a curing agent C, an epoxy resin D, an epoxy resin E, and resin particles F, and a stitched reinforcing fiber base material; wherein

    the curing agent A is an aromatic diamine having a substituent selected from an alkyl group and a halogen group at each of two ortho positions of an amino group;
    the curing agent B is an aromatic polyamine that is liquid at 25°C;
    the curing agent C is a phenylenediamine derivative;
    the epoxy resin D is tetraglycidyl-3,4'-diaminodiphenyl ether;
    the epoxy resin E is an epoxy resin composed of a bifunctional monomer containing an amine-type glycidyl group; and
    the stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member.

2. The fiber-reinforced composite material according to claim 1, wherein the epoxy resin E is diglycidylaniline or diglycidyl-o-toluidine.

3. The fiber-reinforced composite material according to claim 1 or 2, wherein the epoxy resin D is contained in an amount of 50 to 90 mass% with respect to a total mass of the epoxy resins contained in the epoxy resin composition.

4. The fiber-reinforced composite material according to any one of claims 1 to 3, wherein a total mass of the curing agent A, the curing agent B, and the curing agent C is 70 to 100 mass% with respect to a total mass of the curing agent contained in the epoxy resin composition, a mass ratio of the curing agent A to the curing agent B is 1:99 to 99: 1, and the curing agent C is 1 to 43 parts by mass with respect to a total of 100 parts by mass of the curing agent A and the curing agent B.

5. The fiber-reinforced composite material according to any one of claims 1 to 4, wherein the curing agent C has a melting point of 150°C or less.

6. The fiber-reinforced composite material according to any one of claims 1 to 5, wherein the aromatic polyamine of the curing agent B is a phenylenediamine derivative or a 4,4'-diaminodiphenylmethane derivative.

7. The fiber-reinforced composite material according to any one of claims 1 to 6, wherein a ratio between a total number of epoxy groups and a total number of active hydrogens contained in the epoxy resin composition is 0.7 to 1.3.

8. The fiber-reinforced composite material according to any one of claims 1 to 7, wherein the resin particles F have an average particle size of 1.0 μm or less.

9. The fiber-reinforced composite material according to any one of claims 1 to 8, wherein a cure degree after heating at 180°C for 30 minutes is 75% or more as evaluated by dielectric cure degree measurement.

10. The fiber-reinforced composite material according to any one of claims 1 to 9, wherein the reinforcing fiber yarn group of the stitched reinforcing fiber base material is a carbon fiber yarn group.

11. A method for producing a fiber-reinforced composite material, comprising a step of impregnating a stitched reinforcing fiber base material placed in a mold with an epoxy resin composition and performing heat curing, wherein

the epoxy resin composition is an epoxy resin composition containing a curing agent A, a curing agent B, a curing agent C, an epoxy resin D, an epoxy resin E, and resin particles F;
the curing agent A is an aromatic diamine having a substituent selected from an alkyl group and a halogen group at each of two ortho positions of an amino group;
the curing agent B is an aromatic polyamine that is liquid at 25°C;
the curing agent C is a phenylenediamine derivative, and
the epoxy resin D is tetraglycidyl-3,4'-diaminodiphenyl ether;
the epoxy resin E is an epoxy resin composed of a bifunctional monomer containing an amine-type glycidyl group; and
the stitched reinforcing fiber base material is obtained by stitching a plurality of sheet-shaped reinforcing fiber yarn groups of drawn and aligned reinforcing fiber bundles with a stitch thread made of thermoplastic resin fibers having a melting point of 180°C or less, and is penetrated in the thickness direction by the stitch thread of a separate member.

## INTERNATIONAL SEARCH REPORT

International application No.
**PCT/JP2022/028912**

**A. CLASSIFICATION OF SUBJECT MATTER**

***C08G 59/10***(2006.01)i; ***C08K 5/18***(2006.01)i; ***C08L 101/00***(2006.01)i; ***C08L 63/00***(2006.01)i; ***C08J 5/04***(2006.01)i
FI: C08J5/04 CFC; C08L101/00; C08L63/00; C08K5/18; C08G59/10

According to International Patent Classification (IPC) or to both national classification and IPC

**B. FIELDS SEARCHED**

Minimum documentation searched (classification system followed by classification symbols)

C08G59/10; C08K5/18; C08L101/00; C08L63/00; C08J5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/048969 A1 (TEIJIN LTD.) 18 March 2021 (2021-03-18)<br>claims, paragraphs [0040]-[0058], examples | 1-11 |
| Y | JP 62-177016 A (KANEGAFUCHI CHEMICAL INDUSTRY CO., LTD.) 03 August 1987 (1987-08-03)<br>claims, p. 1, lower left column, lines 1-17, examples | 1–11 |
| Y | CN 108794983 A (GUANGDONG BORG NEW MATERIALS SCIENCE, LTD.) 13 November 2018 (2018-11-13)<br>claims, paragraph [0001], examples | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/028912**

| Patent document cited in search report | Publication date (day/month/year) | Patent family member(s) | Publication date (day/month/year) |
| --- | --- | --- | --- |
| WO 2021/048969 A1 | 18 March 2021 | (Family: none) | |
| JP 62-177016 A | 03 August 1987 | (Family: none) | |
| CN 108794983 A | 13 November 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014148572 A
- JP 2015193713 A
- WO 2009119467 A
- JP 6617559 B